# EUROPÄISCHE PATENTSCHRIFT

(11) **EP 1 291 217 B1**
(45) Veröffentlichungstag und Bekanntmachung des Hinweises auf die Patenterteilung: **07.10.2009**
(21) Anmeldenummer: 02019352.0
(22) Anmeldetag: 29.08.2002
(51) Int. Cl.: B60J 7/04

(54) **Fahrzeugdach mit einem bewegbaren Deckelelement**
Vehicle roof with a movable panel
Toit de véhicule avec un panneau amovible

(30) Priorität: 06.09.2001 DE 10143838
(43) Veröffentlichungstag der Anmeldung: 12.03.2003
(73) Patentinhaber: Webasto AG, 82131 Stockdorf (DE)
(72) Erfinder: Schätzler, Walter, 82319 Starnberg (DE); Pfalzgraf, Manfred, 82211 Herrsching (DE); Dittrich, Wolfgang, 82205 Gilching (DE)
(74) Vertreter: Konnerth, Dieter Hans

(56) Entgegenhaltungen:
- DE-A- 10 002 457
- DE-C- 19 938 605
- US-A- 4 995 667
- US-A- 5 791 728

## Beschreibung

Die vorliegende Erfindung betrifft ein Fahrzeugdach mit den Merkmalen des Oberbegriffs des Anspruchs 1.

Bei derartigen Fahrzeugdächern verlaufen die seitlich der Dachöffnung angeordneten Führungsschienen gewöhnlich parallel zueinander, was jedoch in Abhängigkeit von der jeweiligen Dachform nachteilig sein kann. So kann es insbesondere bei Dächern, deren Breite sich in Fahrzeuglängsrichtung ändert, beispielsweise solchen, bei welchen die seitlichen Dachkanten unter einem Winkel zueinander verlaufen, so dass das Dach insgesamt eine konische Form hat, oder aber bei Dächern, deren Dachkanten nach außen gewölbt sind, sowohl aus Designgründen als auch aus Zweckmäßigkeitsgründen unerwünscht sein, dass die Führungsschienen parallel zueinander verlaufen. Insbesondere ist es bei zueinander parallelen Führungsschienen, wenn diese bei einem Dach mit nicht rechteckiger Dachfläche eingesetzt werden, nicht möglich, die Form der Dachöffnung der Form des Daches anzupassen, was aus Designgründen unerwünscht sein kann. Darüber hinaus ist es zum Erreichen einer möglichst großen Kopffreiheit innerhalb des Passagierraums zweckmäßig, die Führungsschienen so weit als möglich im Bereich der Dachkanten anzuordnen, was bei Verwendung paralleler Führungsschienen bei den genannten Dächern nicht möglich ist.

Angesichts obiger Probleme wurde daher in der DE 100 02 457 C2 vorgeschlagen, bei einem Kraftfahrzeugschiebedach zwei gerade, unter einem Winkel zueinander angeordnete Führungsschienen vorzusehen, in welchen verschiebbare Gleitelemente geführt sind, die über Gelenkparallelogramme mit einem starren Deckelelement zum Verschließen der Dachöffnung verbunden sind. Das aus der DE 100 02 457 C2 bekannte Dach ist insofern nachteilig, als eine Lösung mit Gelenkparallelogrammen eine recht aufwendige und komplexe Lösung darstellt, die zudem einen beträchtlichen Bauraum erfordert.

Aus der DE 43 06 451 C1 ist ferner ein Faltdach für Fahrzeuge bekannt, bei dem eine trapezförmige Dachöffnung mittels eines Faltdaches verschlossen werden kann, dessen Faltspriegel über Gelenkverbindungen mit Gleitelementen schwenkbar verbunden sind, die in entlang der Dachöffnung angeordneten, einen Winkel einschließenden Führungsschienen geführt werden. Die hier gezeigte Lösung eignet sich jedoch ausschließlich für Faltdächer und ist nicht auf Dächer mit verschiebbare festen Deckelelementen übertragbar.

Ansonsten finden sich im Stand der Technik Vorschläge, um geringfügige Abweichungen hinsichtlich der Parallelität der Führungsschienen auszugleichen. Die gattungsgemäße DE 199 38 605 C1 offenbart ein Faltdach für ein Fahrzeug, bei welchem in dem vorderen Führungselement, der sogenannten Dachspitze, eine Lageranordnung vorgesehen ist, die bezüglich der Fahrzeugquerrichtung für einen Toleranzausgleich sorgt.

Es ist eine Aufgabe der vorliegenden Erfindung, ein Fahrzeugdach zu schaffen, bei welchem unter relativ geringem konstruktiven Aufwand und ohne nennenswerte Vergrößerung des Platzbedarfs für die Lagerelemente ein verschiebbarer Deckel sicher an Führungsschienen geführt ist, die nicht parallel zueinander verlaufen und deren Form der jeweiligen Dachform bzw. der Form des Dachausschnittes angepasst sein kann.

Diese Aufgabe wird bei einem Fahrzeugdach der eingangs genannten Art dadurch gelöst, dass die Führungsschienen so angeordnet sind, dass sich der gegenseitige Nennabstand der Führungsschienen über den Verlauf der Führungsschienen in Fahrzeuglängsrichtung ändert, und dass eine Dämpfungseinrichtung vorgesehen ist, um ungewollte Querbewegungen des Deckelelements gegenüber der festen Dachfläche zu verhindern.

Hierbei kann der gegenseitige Nennabstand der Führungsschienen, d.h. das Sollmaß des Abstands der Führungsschienen, durch entsprechend stabile Auslegung der Lagerzapfen mehrere Zentimeter betragen, so dass die Form des Deckelelements bzw. der Verlauf der Führungsschienen in optimaler Weise an die Form des Daches bzw. an den Verlauf der Dachkanten angepasst werden kann. Da ferner die Lagerbuchse, die den verschiebbar darin angeordneten Lagerzapfen aufnimmt, in dem Deckelelement selbst angeordnet ist, ergeben sich bei der erfindungsgemäßen Lösung keinerlei Nachteile hinsichtlich der Bauhöhe des Fahrzeugdaches. Anders als bei der eingangs erwähnten DE 100 02 457 C2, bei welcher die parallelogrammartige Hebelanordnung in einer zu der Ebene des Deckelelements versetzten Ebene angeordnet sein muss, wodurch nicht nur die Bauhöhe des beweglichen Daches vergrößert wird, sondern auch entweder die Hebelmechanik von außen frei sichtbar ist oder die Dachöffnung entsprechend klein gestaltet werden muss, um die Hebelmechanik in dem die Dachöffnung umgebenden Dachbereich verbergen zu können, kann bei der erfindungsgemäßen Lösung die volle Breite des Daches ausgenutzt werden, und es sind keine beweglichen Teile nach außen hin sichtbar.

Weitere Ausgestaltungen der Erfindung ergeben sich aus den Unteransprüchen.

Während nach dem erfindungsgemäßen Konzept die Führungsschienen in der Ebene des Deckelelements jede beliebige Form haben können, bestehen die häufigsten Anwendungen darin, dass die Führungsschienen unter einem Winkel zueinander angeordnet sind, wie es beispielsweise bei einem trapezförmigen Dach zweckmäßig wäre, oder aber dass die Führungsschienen parallel zur Dachebene gekrümmt sind, beispielsweise für ein Dach, welches in einem mittleren Bereich in Fahrzeuglängsrichtung breiter ist als in dessen vorderem und hinterem Bereich oder im vorderen und im hinteren Bereich breiter ist als im mittleren Bereich.

Ferner kann sich die Breite der festen Dachfläche in Fahrzeuglängsrichtung ändern und können die Führungsschienen parallel zu den seitlichen Dachkanten angeordnet sein. Ein derartiges Fahrzeugdach ist nicht nur optisch ansprechend, sondern darüber hinaus insofern zweckmäßig, als die Führungsschienen somit über ihre gesamte Länge hinweg so nahe wie möglich an die Dachkanten, d.h. den Übergangsbereich zwischen der eigentlichen Dachfläche und den Dachseitenwänden, herangeführt werden können, so dass sich einerseits eine möglichst große Dachöffnung realisieren lässt und andererseits der Kopfraum oder der Durchsichtsbereich im Insassenbereich im Inneren des Fahrzeugs freigehalten wird.

Wie bei herkömmlichen Dächern kann, auch wenn sich die Breite der festen Dachfläche in Fahrzeuglängsrichtung ändert, die Dachöffnung im wesentlichen rechteckig sein, wobei die Führungsschienen jedoch der Dachform angepasst sein können und beispielsweise parallel zu den Dachkanten verlaufen.

Die Breite der Dachöffnung kann sich jedoch auch entsprechend der Breite der festen Dachfläche in Fahrzeuglängsrichtung ändern, beispielsweise trapezförmig sein, woraus sich einerseits vielfältige Gestaltungsmöglichkeiten ergeben und andererseits die Größe der Dachöffnung optimiert werden kann.

Um ein Rütteln oder Klappern des Deckelelements in Fahrzeugquerrichtung zu verhindern, kann ferner in der Lagerbuchse ein Federelement vorgesehen sein, welches den Lagerzapfen gegenüber dem Deckelelement vorspannt. Eine besonders geringe Bauhöhe des Deckelelements ergibt sich, wenn hierbei das Federelement in axialer Verlängerung zu dem Lagerzapfen angeordnet ist und an das axiale Ende des Lagerzapfens angreift.

Die erfindungsgemäße Dämpfungseinrichtung ist vorgesehen, um ungewollte Bewegungen des Deckelelements gegenüber der festen Dachfläche zu verhindern. Hierbei kann die Dämpfungseinrichtung mindestens einen Stoßdämpfer umfassen, der einer plötzlichen Verlagerung des Lagerzapfens gegenüber der Lagerbuchse entgegenwirkt. Ist den Lagerzapfen/Lagerbuchsen-Anordnungen zu beiden Seiten des Deckelelements jeweils ein Stoßdämpfer zugeordnet, so sind vorteilhafterweise die einander gegenüberliegenden Stoßdämpfer miteinander gekoppelt. Insbesondere können die Stoßdämpfer jeweils einen in einer Kammer angeordneten Kolben aufweisen, der die Kammer in zwei Druckkammern unterteilt, wobei die Druckkammern einander gegenüberliegender Stoßdämpfer so gekoppelt sind, dass durch Überleitung von Druckfluid zwischen den Druckkammern die Kolben jeweils zweier einander gegenüberliegender Stoßdämpfer gleichzeitig einwärts bzw. auswärts bezüglich des Deckelelements verlagert werden. Auf diese Weise wird das Deckelelement unabhängig von seiner Verschiebestellung in Fahrzeuglängsrichtung immer mittig zentriert und gegen ruckartige Verlagerungen in Fahrzeugquerrichtung gesichert, um so ein unerwünschtes Rütteln oder Klappern des Deckelements auszuschließen, wie es andernfalls von einem das Fahrzeugdach überströmenden Fahrtwind und durch Querstöße bei Kurvenfahrten z. B. über Kopfsteinpflaster hervorgerufen werden könnte, und um Ermüdungsbrüche der Deckelanbindung zu vermeiden.

Die Dämpfungseinrichtung lässt sich jedoch auch dadurch bewerkstelligen, dass den Lagerzapfen/Lagerbuchsen-Anordnungen zu beiden Seiten des Deckelelements jeweils ein zug- und drucksteifes Antriebselement zugeordnet wird, die so miteinander gekoppelt sind, dass die Bewegung eines Antriebselements eine entsprechende Bewegung des jeweils anderen Antriebselements hervorruft. Um die Antriebselemente, bei welchen es sich beispielsweise um Zahnstangen oder um drucksteife Antriebskabel handeln kann, miteinander zu koppeln, kann beispielsweise ein Zahnrad vorgesehen sein. Durch Einstellung der Leichtgängigkeit des Zahnrades lässt sich hierbei die Dämpfungswirkung der Dämpfungseinrichtung einstellen.

Bevorzugte Ausführungsbeispiele der vorliegenden Erfindung werden nachstehend unter Bezugnahme auf die beiliegenden Zeichnungen näher erläutert. Es zeigt:
- FIG. 1: ein Fahrzeug mit einem Fahrzeugdach nach der vorliegenden Erfindung;
- FIG. 2: eine weitere Ausführungsform eines Fahrzeugdaches nach der vorliegenden Erfindung;
- FIG. 3: eine Seitenansicht eines Gleitelements, wie es in den Dächern aus den FIGN. 1 und 2 eingesetzt wird;
- FIG. 4: eine Schnittansicht durch eine der Führungsschienen, wie sie bei den Fahrzeugdächern gemäß den FIGN. 1 und 2 verwendet werden;
- FIG. 5: eine Ansicht ähnlich FIG. 3 einer weiteren Ausführungsform des erfindungsgemäßen Fahrzeugdaches;
- FIG. 6: eine schematische Schnittansicht einer Dämpfungseinrichtung des Fahrzeugdaches nach der vorliegenden Erfindung; und
- FIG. 7: eine schematische Schnittansicht einer weiteren Ausführungsform einer Dämpfungseinrichtung für ein Fahrzeugdach nach der vorliegenden Erfindung.

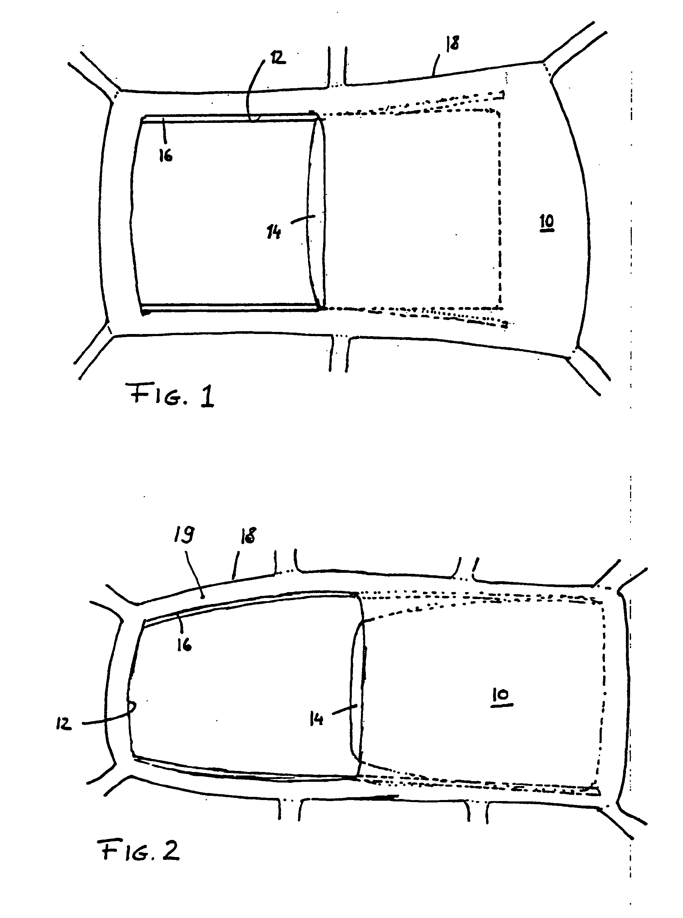

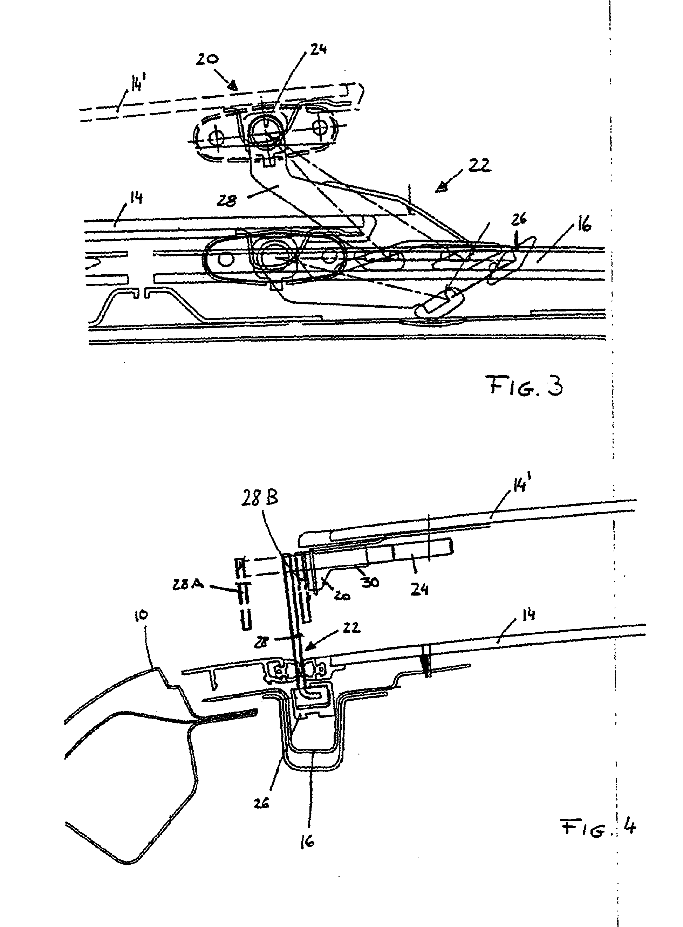

In FIG. 1 ist mit 10 die feste Dachhaut eines Fahrzeugdaches bezeichnet, das in Fahrtrichtung (nach links in Fig. 1 und 2) gesehen vorne schmäler ist als hinten und dementsprechend insgesamt eine im wesentlichen trapezförmige Fläche bildet. In der festen Dachhaut 10 ist eine Dachöffnung 12 ausgebildet, die mittels eines in Fahrzeuglängsrichtung verschiebbaren und unter die feste Dachhaut 10 absenkbaren Deckels 14 wahlweise verschlossen oder weitgehend freigegeben werden kann. Das Deckelelement 14 ist hierbei an seitlich entlang der Dachöffnung 12 verlaufenden Führungsschienen 16 geführt. Wie in FIG. 1 in gestrichelten Linien angedeutet ist, verlaufen die Führungsschienen 16 über ihre gesamte Länge parallel zu den seitlichen Dachrahmen oder Dachkanten 18, so dass der Kopfraum auch im hinteren Bereich der Fahrgastzelle unterhalb des verbreiterten Bereichs der Dachfläche frei von zur Führung des Deckelelements 14 benötigten Komponenten gehalten werden kann, und insbesondere der Kopfraum in diesem hinteren Fahrzeugbereich nicht durch gerade Führungsschienen, wie sie aus dem Stand der Technik bekannt sind, eingeschränkt wird. Um dies zu ermöglichen, ist das Deckelelement 14 mindestens in seinem hinteren Bereich an Gleitelementen gelagert, die (wie unter Bezugnahme auf die Figuren 3 bis 5, die im Gegensatz zu dem innengeführten Deckel 14 der Fig. 1 und 2 ein außengeführtes Schiebedach zeigen, näher erläutert wird) Lagerzapfen aufweisen, die teleskopartig in an dem Deckelelement 14 vorgesehenen Lagerbuchsen ein- und ausfahrbar sind, um den durch Verschieben des Deckelelements 14 in Fahrzeuglängsrichtung entstehenden Abstand zwischen den Lagerstellen des Deckelelements 14 und den Führungsschienen 16 zu überbrücken.

In FIG. 2 ist ein weiteres Anwendungsbeispiel zum vorteilhaften Einsatz des hier vorgeschlagenen Fahrzeugdaches dargestellt. Hierbei ist die Dachfläche 10 eines Fahrzeugs, bei welchem es sich beispielsweise um eine Großraumlimousine handeln kann, gegenüber einer üblichen Gestaltung in seinem vorderen Bereich schmäler ausgeführt. In der Dachfläche 10 ist eine Dachöffnung 12 derart ausgebildet, dass der zwischen dem Seitenrand der Dachöffnung 12 und der seitlichen Dachkante 18 verbleibende Rand 19 der festen Dachfläche 10 eine in Fahrzeuglängsrichtung gleichbleibende Breite aufweist. Wird das Deckelelement 14, wie in FIG. 2 angedeutet, nach hinten unter die feste Dachfläche 10 verschoben, so entsteht im vorderen Bereich des Deckelelements 14 ein Abstand zwischen den nahe den Seitenrändern des Deckelelements 14 angeordneten Lagerstellen des Deckelelements 14 und den parallel zu den Dachkanten 18 angeordneten Führungsschienen 16. Daher werden zumindest im vorderen Bereich des Deckelelements 14 wiederum teleskopartige Lagerzapfen/Lagerbuchsen-Anordnungen eingesetzt, die das Deckelement 14 auch dann sicher und zentriert lagern, wenn das Deckelelement 14 nach hinten unter Bildung eines Abstandes zwischen den Seitenrändern des Deckelements 14 und den Führungsschienen 16 verlagert wird. Sofern die Führungsschienen 16 auch in der hinteren Fahrzeughälfte nicht parallel zueinander verlaufen, werden auch an den hinteren Lagerstellen des Deckelelements 14 die im folgenden unter Bezugnahme auf die FIGN. 3 bis 5 erläuterten Lagerzapfen/Lagerbuchsen-Anordnungen eingesetzt. Entsprechend den Fig. 3 bis 5 kann das Deckelelement 14 bei den Dächern der Fig. 1 und 2 auch oberhalb der festen Dachfläche 10 geführt sein.

FIG. 3 zeigt eine Schnittansicht, gesehen in Fahrzeugquerrichtung, im Bereich der Hinterkante des Deckelelements 14. Das Deckelelement 14 ist hierbei der starre Deckel eines Schiebehebedaches, welches wahlweise unter die feste Dachfläche 10 abgesenkt und nach hinten verschoben werden kann oder dessen Hinterkante über die feste Dachfläche 10 hinaus ausgestellt werden kann. Nahe seiner Hinterkante weist das Deckelelement 14, bei welchem es sich insbesondere um den Deckel eines Stahlschiebedaches oder den zumindest teilweise transparenten Deckel eines Glas- oder Kunststoffdaches handeln kann, eine Lageranordnung 20 auf, die mit einem an einem insgesamt mit 22 bezeichneten Gleitelement vorgesehenen Lagerzapfen 24 zusammenwirkt. Wie in FIG. 3 angedeutet ist, kann das Gleitelement 22 verschwenkt werden, um den Lagerzapfen 24 und damit die Hinterkante des Deckelelements 14 anzuheben, oder aber es kann im abgesenkten Zustand entlang der Führungsschiene 16 verschoben werden.

FIG. 4 zeigt einen Schnitt durch das Fahrzeugdach aus den FIGN. 1 oder 2 im Bereich der Führungsschienen, gesehen in Fahrzeuglängsrichtung. Hierbei verdeutlicht die FIG. 4 die unterschiedlichen Lagen sowohl des Deckelelements 14, das in FIG. 4 in der abgesenkten Stellung mit 14 und in der angehobenen Stellung mit 14' bezeichnet ist, sowie der Lagerzapfen/Lagerbuchsen-Anordnung, wie nachstehend erläutert wird. Wie bei bekannten Dächern weist das Gleitelement 22 einen Gleitschuh 26 auf, der in der Führungsschiene 16 geführt wird. Der Gleitschuh 26 umschließt das untere Ende eines Stützhebels 28, an dessen oberem Ende der in Fahrzeugquerrichtung ausgerichtete Lagerzapfen 24 befestigt ist. Der Lagerzapfen 24 ist in einer Lagerbuchse 30 teleskopartig verschiebbar geführt, die Teil der an dem Deckelelement 14 angebrachten Lageranordnung 20 ist. Zur Vereinfachung der Darstellung zeigt FIG. 4 den Stützhebel 28 sowohl in seiner aufgestellten Stellung, in welcher die Hinterkante des Deckelelements 14 über die feste Dachfläche 10 ausgestellt ist, als auch in der Stellung, wenn das Deckelelement 14 abgesenkt ist. Ist die Lageranordnung 20 dem hinteren Bereich des Deckelelements 14 des Fahrzeugdaches aus FIG. 1 zugeordnet, und ist das Dekkelelement 14 ganz ausgefahren, d.h. vollständig in Fahrtrichtung nach hinten verschoben, so nimmt der Stützhebel 28 die in FIG. 4 mit 28A bezeichnete Lage ein, in welcher der Lagerzapfen 24 gegenüber der deckelfesten Lagerbuchse 30 ausgefahren ist. Ist hingegen das Deckelelement 14 zum Verschließen der Dachöffnung 12 vollständig nach vorne verschoben, so nimmt der Stützhebel 28 die mit 28B bezeichnete Lage ein, in welcher der Lagerzapfen 24 vollständig in die Lagerbuchse 30 eingefahren ist. Das Ein- und Ausfahren des Lagerzapfens 24 bezüglich der Lagerbuchse 30 erfolgt hierbei zwangsweise durch die Form der Führungsschienen 16, die beim Verfahren des Deckelelements 14 nach hinten die Lagerzapfen 24 automatisch nach außen aus den Lagerbuchsen 30 herausziehen. Die Lagerbuchse 30 kann in ihrer Längsrichtung zwei- oder mehrteilig mit entsprechenden voneinander beabstandeten Lagerführungen gebildet sein, so daß durch die Reduzierung der Lagerflächen die Reibung bei der Bewegung des Lagerzapfens 24 verringert wird. Die einzelnen Lagerführungen können ballig gebildet sein, so daß die Lagerung gegen Verkanten unempfindlich ist.

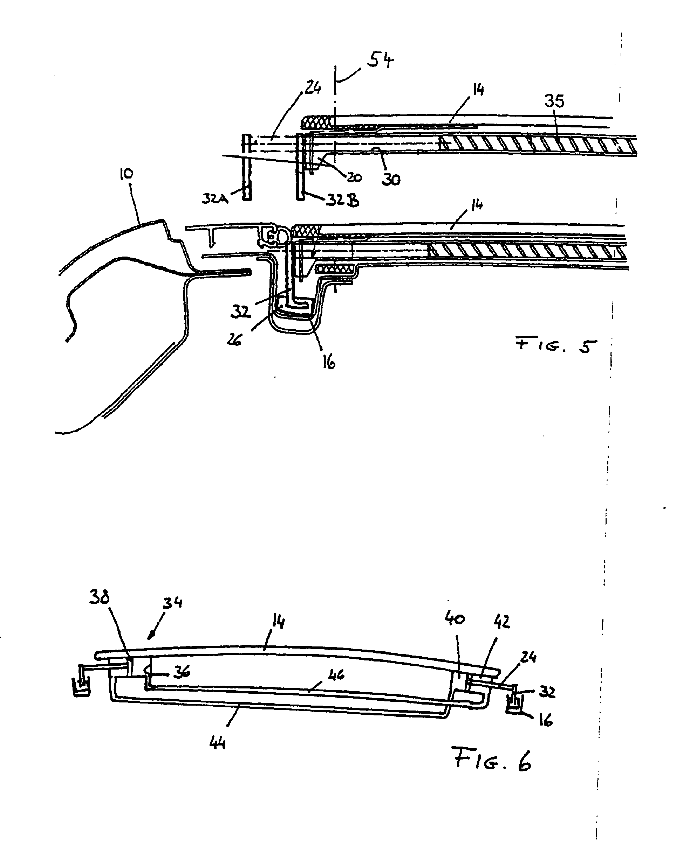

FIG. 5 zeigt eine Ansicht ähnlich FIG. 4, die eine Lagerzapfen/Lagerbuchsen-Anordnung veranschaulicht, wie sie im vorderen Bereich des Deckelelements 14 des in FIG. 2 gezeigten Fahrzeugdaches eingesetzt wird. Hierbei ist im vorderen Bereich des Deckelelements 14 eine Lageranordnung 20 mit einer Lagerbuchse 30 angebracht, in die ein Lagerzapfen 24 verschiebbar eingreift, der am oberen Ende eines Stützhebels 32 angebracht ist. Das untere Ende des Stützhebels 32 ist an einem Gleitschuh 26 angebracht oder wird von dem Gleitschuh 26 umschlossen, der in der Führungsschiene 16 verschiebbar geführt ist. Da bei dem dargestellten Ausführungsbeispiel die Vorderkante des Deckelelements 14 unabhängig von der Verschiebestellung des Deckelelements 14 immer auf der gleichen Höhe bezüglich den Führungsschienen 16 gehalten wird, ist eine Schwenkbarkeit des Stützhebels 32, wie sie bezugnehmend auf die FIGN. 3 und 4 für den Stützhebel 28 erläutert wurde, bei dem Dach gemäß den FIGN. 2 und 5 nicht erforderlich, jedoch kann die Schwenkbarkeit des Stützhebebls 32 auch an der Vorderkante des Deckelelements 14 vorgesehen sein.

Im oberen Bereich der FIG. 5 ist das Deckelelement 14 gemeinsam mit der Lagerzapfen/Lagerbuchsen-Anordnung nochmals dargestellt, wobei zur Vereinfachung der Darstellung der Dachrahmen sowie die Führungsschiene 16 weggelassen wurden. Wenn das Deckelelement 14 vollständig nach hinten verschoben ist, wie es in FIG. 2 dargestellt ist, befindet sich das Gleitelement 22 in seinem maximalen Abstand bezüglich des Deckelelements 14, wobei der Lagerzapfen 24 maximal aus der Lagerbuchse 30 herausgeschoben ist, so dass der Stützhebel die mit 32A bezeichnete Stellung einnimmt. Die Lage des Stützhebels 32 in der geschlossenen Stellung des Deckelelements 14 ist mit 32B bezeichnet. Ist hingegen abweichend von FIG. 2 das Fahrzeugdach am Vorderende breiter als in seiner Mitte, so ist der voranstehende Bewegungsablauf entgegengesetzt.

Um ein Klappern des Deckelelements 14 zu verhindern, ist bei der Ausführungsform gemäß FIG. 5 in der Lageranordnung 20 ein Federelement 35 vorgesehen, das den Lagerzapfen 24 gegenüber dem Deckelelement 14 nach außen vorspannt. Um die Bauhöhe der Lageranordnung möglichst gering zu halten, greift das Federelement 35 hierbei an das innenliegende Ende des Lagerzapfens 24 in der axialen Verlängerung des Lagerzapfens 24 an. Es versteht sich, dass die Ausbildung des Federelements in Abhängigkeit von den gewünschten Anforderungen auch anders erfolgen kann, beispielsweise durch eine den Lagerzapfen 24 umgebende Hülse, die mit ihrem innenliegenden Ende den Lagerzapfen 24 abstützt und von einer den Lagerzapfen 24 umgebenden Feder nach außen hin vorgespannt wird.

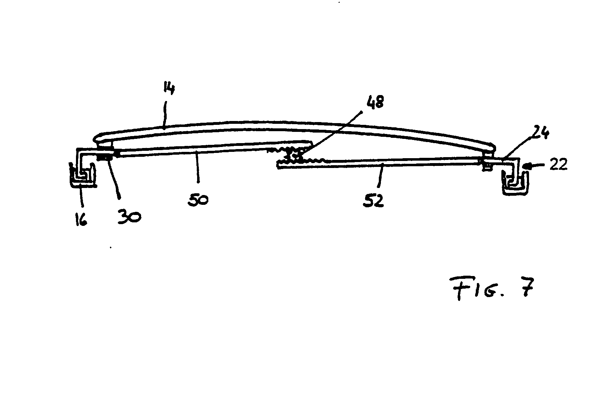

In FIG. 6 ist eine bevorzugte Ausführungsform einer Dämpfungseinrichtung dargestellt, die ruckartige Bewegungen des Deckelelements 14 in Fahrzeugquerrichtung verhindert. Obschon, wie eingangs erwähnt, separate Stoßdämpfer an einem oder mehreren der Lagerzapfen 24 vorgesehen werden können, wird bevorzugt, dass zu beiden Seiten des Deckelelements 14 Dämpfungseinrichtungen vorgesehen sind, die miteinander gekoppelt sind, wie dies in den FIGN. 6 und 7 dargestellt ist.

Bei der Ausführungsform gemäß FIG. 6 sind zu beiden Seiten des Deckelelements 14 Stoßdämpfer 34 vorgesehen, die einen in einer Kammer 36 angeordneten Kolben 38 aufweisen, der die Kammer 36 in zwei Druckkammern 40 bzw. 42 unterteilt. Der Stößel des Kolbens 38 ist hierbei mit dem Lagerzapfen 24 des Gleitelements 22 verbunden oder wird von diesem gebildet. Die Druckkammern 40 und 42 sind mit einem geeigneten Hydraulikfluid, insbesondere einem Hydrauliköl oder mit Gas, gefüllt. Die Druckkammern der beiden sich über die Fahrzeuglängsachse hinweg gegenüberliegenden Stoßdämpfer 34 sind hierbei so mittels Druckfluidleitungen 44 und 46 miteinander gekoppelt, dass jeweils die innenliegende Druckkammer 40 des einen Stoßdämpfers 34 mit der außenliegenden Druckkammer 42 des jeweils anderen Stoßdämpfers verbunden ist. Handelt es sich bei dem Deckelelement 14 beispielsweise um das Deckelelement 14 des in FIG. 2 gezeigten Fahrzeugdaches, so strömt, wenn das Deckelelement 14 nach hinten verschoben wird, Druckfluid von der außenliegenden Druckkammer 42 des auf der in Fahrtrichtung rechten Seite des Deckelelements 14 angeordneten Stoßdämpfers 34 zu der innenliegenden Kammer 40 des auf der in Fahrtrichtung linken Seite des Deckelelements 14 angeordneten Stoßdämpfers 34. Auf diese Weise werden die Kolben 38 beider Stoßdämpfer gleichmäßig nach außen verlagert und das Deckelelement 14 wird zentriert gehalten. Da die Verlagerung der Kolben 38 hierbei durch die Zwangsführung der Gleitelemente 22 innerhalb der Führungsschienen 16 erfolgt, ist zum Überleiten des Druckfluids keine Fluidfördereinrichtung erforderlich. Die Trägheit des Systems und damit das Vermögen, ruckartige Verlagerungen des Deckelelements 14 in Fahrzeugquerrichtung abzudämpfen oder zu verhindern, wird hierbei von der Zähigkeit des Druckfluids sowie von den Strömungswiderständen der Druckleitungen 44 und 46 bzw. deren Einlässe in die Druckkammern 40 und 42 bestimmt. In jedem Fall bewirkt die Trägheit des Druckfluids innerhalb des Systems, dass das Deckelelement 14 auch bei plötzlich auf das Fahrzeugdach einwirkenden Kräften, wie sie beispielsweise durch einen das Fahrzeugdach überströmenden Luftstrom oder durch Fahrbahnunebenheiten hervorgerufen werden können, eine stabile Lage in Fahrzeugquerrichtung beibehält. Andererseits wird eine im Vergleich zu solchen plötzlichen Verlagerungen relativ langsam erfolgende Verlagerung des Deckelelements 14 in Fahrzeuglängsrichtung, wie sie durch den Antrieb des Deckelelements 14 entlang der Führungsschienen 16 hervorgerufen wird, nicht behindert, da bei solchen "langsamen" Verlagerungen das Druckfluid von der Druckkammer des Stoßdämpfers auf einer Seite des Deckelelements 14 in die zugeordnete Druckkammer des Stoßdämpfers auf der anderen Seite des Deckelelements 14 ausweichen kann.

FIG. 7 zeigt eine alternative Ausführungsform zur Gestaltung einer gekoppelten Dämpfungseinrichtung. Hierbei sind an die Lagerzapfen 24 der Gleitelemente 22 jeweils Zahnstangen 50 bzw. 52 angelenkt, deren von den Gleitelementen 22 wegweisende Enden an ein Zahnrad 48 so angreifen, dass eine Drehung des Zahnrades in FIG. 7 im Uhrzeigersinn bewirkt, dass die Lagerzapfen 24 auf beiden Seiten des Deckelelements 14 nach innen verlagert werden, d.h. eingefahren werden, während eine Drehung des Zahnrades in FIG. 7 gegen den Uhrzeigersinn ein Ausfahren der beiden Lagerzapfen 24 bewirkt. Es versteht sich, dass anstelle der Zahnstangen 50 und 52 auch andere zug- und druckfeste Antriebsmittel vorgesehen werden können, wie z.B. drucksteife Antriebskabel, wie sie bei den vorliegend beschriebenen Dächern auch zum Verfahren des Deckelelements 14 verwendet werden. Das Vermögen der in FIG. 7 gezeigten Dämpfungseinrichtung, ruckartige Bewegungen des Deckelelements 14 zu verhindern oder zumindest abzuschwächen, wird hierbei von der Trägheit des Zahnrades 48, einer Drehung entgegenzuwirken, bestimmt, kann aber auch dadurch eingestellt werden, dass beispielsweise die Bewegung der Lagerzapfen 24 in den Lagerbuchsen 30 durch geeignete Maßnahmen gehemmt wird.

Zweckmäßigerweise sind die Lagerzapfen 24, beispielsweise über ihre Lagerbuchsen 30, an dem Dachelement 14 um eine zum Dachelement 14 senkrechte Schwenkachse 54 (siehe FIG. 5) schwenkbar gelagert, so daß sich die Gleitelemente 22 beim Verschieben des Deckelelements 14 an den Verlauf der nichtparallelen Führungsschienen 16 anpassen können, wodurch übermäßige Reibung und Klemmung vermieden wird.

Das vorliegend erläuterte Konzept eröffnet vielfältige Gestaltungsmöglichkeiten im Dachbereich. Während bisher die Deckelelemente zum Verschließen der Dachöffnung immer im wesentlichen rechteckig sein mussten, ermöglicht das vorgeschlagene Konzept nunmehr Dachausschnitte, die der gesamten Form der Dachfläche angepasst sind. Abgesehen von vielfältigen Designmöglichkeiten erlaubt das hier vorgeschlagene Konzept somit auch eine Vergrößerung des Dachöffnung, da diese nicht mehr wie bei bisher bekannten Dächern durch die schmalste Stelle des Daches bestimmt wird, sondern deren Breite sich über die Längserstreckung der Dachöffnung hinweg ändern kann.

Neben Schiebedächern und Schiebehebedächern lässt sich das hier vorgeschlagene Konzept ferner auch auf Spoilerdächer, Mehrdeckeldächer oder Lamellendächer anwenden.

### Bezugszeichenliste

- 10: feste Dachhaut
- 12: Dachöffnung
- 14: Deckelelement
- 16: Führungsschiene
- 18: seitliche Dachkante
- 19: Rand
- 20: Lageranordnung an 14
- 22: Gleitelement
- 24: Lagerzapfen
- 26: Gleitschuh
- 28: Stützhebel
- 30: Lagerbuchse
- 32: Stützhebel
- 34: Stoßdämpfer
- 35: Feder
- 36: Kammer
- 38: Kolben
- 40, 42: Druckkammern
- 44, 46: Druckfluidleitungen
- 48: Zahnrad
- 50, 52: Zahnstangen
- 54: Schwenkachse

## Patentansprüche

1. Fahrzeugdach mit einer in einer festen Dachfläche (10) vorgesehenen Dachöffnung (12) und einem Deckelelement (14) zum Verschließen und wenigstens teilweisen Öffnen der Dachöffnung (12), wobei an dem Deckelelement (14) Gleitelemente (22) angelenkt sind, die in seitlich entlang der Dachöffnung (12) angeordneten Führungsschienen (16) verschiebbar geführt sind, und
wobei jedes der Gleitelemente (22) an seinem dem Deckelelement (14) zugewandten Ende einen sich im wesentlichen in Fahrzeugquerrichtung erstreckenden Lagerzapfen (24) aufweist, der in eine an dem Deckelelement (14) vorgesehene Lagerbuchse (30) verschiebbar eingreift,
**dadurch gekennzeichnet,**
**dass** die Führungsschienen (16) so angeordnet sind, dass sich der gegenseitige Nennabstand der Führungsschienen (16) über den Verlauf der Führungsschienen (16) in Fahrzeuglängsrichtung ändert, und
**dass** eine Dämpfungseinrichtung (34) vorgesehen ist, um ungewollte Querbewegungen des Deckelelements (14) gegenüber der festen Dachfläche (10) zu verhindern.

2. Fahrzeugdach nach Anspruch 1,
**dadurch gekennzeichnet, dass** die Führungsschienen (16) unter einem Winkel zueinander angeordnet sind.

3. Fahrzeugdach nach Anspruch 1,
**dadurch gekennzeichnet, dass** die Führungsschienen (16) parallel zur Dachebene gekrümmt sind.

4. Fahrzeugdach nach einem der vorhergehenden Ansprüche,
**dadurch gekennzeichnet, dass** sich die Breite der festen Dachfläche (10) in Fahrzeuglängsrichtung ändert und die Führungsschienen (16) parallel zu den seitlichen Dachrahmen oder Dachkanten (18) angeordnet sind.

5. Fahrzeugdach nach Anspruch 4,
**dadurch gekennzeichnet, dass** sich die Breite der Dachöffnung (12) entsprechend der Breite der festen Dachfläche (10) in Fahrzeuglängsrichtung ändert.

6. Fahrzeugdach nach Anspruch 5,
**dadurch gekennzeichnet, dass** die Dachöffnung (12) im wesentlichen trapezförmig ist.

7. Fahrzeugdach nach einem der vorhergehenden Ansprüche,
**dadurch gekennzeichnet, dass** die Gleitelemente (22) schwenkbar gelagert sind.

8. Fahrzeugdach nach einem der vorhergehenden Ansprüche,
**dadurch gekennzeichnet, dass** in der Lagerbuchse (30) ein Federelement (35) vorgesehen ist, das den Lagerzapfen (24) gegenüber dem Deckelelement (14) vorspannt.

9. Fahrzeugdach nach Anspruch 8,
**dadurch gekennzeichnet, dass** das Federelement (35) in axialer Verlängerung zu dem Lagerzapfen (24) angeordnet ist und an das axiale Ende des Lagerzapfens (24) angreift.

10. Fahrzeugdach nach einem der Ansprüche 1 bis 9,
**dadurch gekennzeichnet, dass** die Dämpfungseinrichtung mindestens einen Stoßdämpfer (34) umfasst, der einer plötzlichen Verlagerung des Lagerzapfens (24) gegenüber der Lagerbuchse (30) entgegenwirkt.

11. Fahrzeugdach nach Anspruch 10,
**dadurch gekennzeichnet, dass** den Lagerzapfen/Lagerbuchsen-Anordnungen (24, 30) zu beiden Seiten des Deckelelements (14) jeweils ein Stoßdämpfer (34) zugeordnet ist, und dass die einander gegenüber liegenden Stoßdämpfer miteinander gekoppelt sind.

12. Fahrzeugdach nach Anspruch 11,
**dadurch gekennzeichnet, dass** die Stoßdämpfer (34) jeweils einen in einer Kammer (36) angeordneten Kolben (38) aufweisen, der die Kammer (36) in zwei Druckkammern (40, 42) unterteilt, und dass die Druckkammern (40, 42) einander gegenüber liegender Stoßdämpfer (34) so gekoppelt sind, dass durch Überleitung von Druckfluid zwischen den Druckkammern (40, 42) die Kolben (38) jeweils zweier einander gegenüber liegender Stoßdämpfer (34) gleichzeitig einwärts bzw. auswärts bezüglich des Deckelelements (14) verlagert werden.

13. Fahrzeugdach nach einem der Ansprüche 1 bis 9,
**dadurch gekennzeichnet, dass** den Lagerzapfen/Lagerbuchsen-Anordnungen (24, 30) zu beiden Seiten des Deckelelements (14) jeweils ein zug- und drucksteifes Antriebselement (50, 52) zugeordnet ist, die so miteinander gekoppelt sind, dass die Bewegung des einen Antriebselements eine entsprechende Bewegung des jeweils anderen Antriebselements hervorruft.

14. Fahrzeugdach nach Anspruch 13,
**dadurch gekennzeichnet, dass** die Antriebselemente (50, 52) über ein Zahnrad (48) miteinander gekoppelt sind und dass als Antriebselemente Zahnstangen (50, 52) oder drucksteife Antriebskabel vorgesehen sind.

15. Fahrzeugdach nach einem der vorhergehenden Ansprüche,
**dadurch gekennzeichnet, dass** die Gleitelemente (22) schwenkbar in den Führungsschienen (16) gelagert sind, um den Lagerzapfen (24) gegenüber der Führungsschiene (16) anzuheben.

16. Fahrzeugdach nach einem der vorhergehenden Ansprüche,
**dadurch gekennzeichnet, dass** der Lagerzapfen(24) um eine zum Deckelelement (14) senkrechte Schwenkachse (54) schwenkbar gelagert ist, insbesondere mittels seiner an dem Deckelelement (14) schwenkbar gelagerten Lagerbuchse (30).

## Claims

1. Vehicle roof with a roof opening (12) provided in a fixed roof surface (10) and with a panel element (14) for closing and at least partially opening the roof opening (12), wherein sliding elements (22) are coupled to the panel element (14) and are guided displaceably in guide rails (16) arranged laterally along the roof opening (12), and wherein each of the sliding elements (22), at the end thereof which faces the panel element (14), has a bearing pin (24) which extends substantially in the transverse direction of the vehicle and engages displaceably in a bearing bushing (30) provided on the panel element (14), **characterized in that** the guide rails (16) are arranged in such a manner that the mutual nominal distance between the guide rails (16) changes over the course of the guide rails (16) in the longitudinal direction of the vehicle, and **in that** a damping device (34) is provided in order to prevent undesired transverse movements of the panel element (14) in relation to the fixed roof surface (10).

2. Vehicle roof according to Claim 1, **characterized in that** the guide rails (16) are arranged at an angle to each other.

3. Vehicle roof according to Claim 1, **characterized in that** the guide rails (16) are curved parallel to the roof plane.

4. Vehicle roof according to one of the preceding claims, **characterized in that** the width of the fixed roof surface (10) changes in the longitudinal direction of the vehicle, and the guide rails (16) are arranged parallel to the lateral roof frames or roof edges (18).

5. Vehicle roof according to Claim 4, **characterized in that** the width of the roof opening (12) changes in a manner corresponding to the width of the fixed roof surface (10) in the longitudinal direction of the vehicle.

6. Vehicle roof according to Claim 5, **characterized in that** the roof opening (12) is substantially trapezoidal.

7. Vehicle roof according to one of the preceding claims, **characterized in that** the sliding elements (22) are mounted pivotably.

8. Vehicle roof according to one of the preceding claims, **characterized in that** a spring element (35) which prestresses the bearing pin (24) in relation to the panel element (14) is provided in the bearing bushing (30).

9. Vehicle roof according to Claim 8, **characterized in that** the spring element (35) is arranged as an axial extension of the bearing pin (24) and acts on the axial end of the bearing pin (24).

10. Vehicle roof according to one of Claims 1 to 9, **characterized in that** the damping device comprises at least one shock absorber (34) which counteracts a sudden displacement of the bearing pin (24) in relation to the bearing bushing (30).

11. Vehicle roof according to Claim 10, **characterized in that** the bearing pin/bearing bushing arrangements (24, 30) on both sides of the panel element (14) are each assigned a shock absorber (34), and **in that** the mutually opposite shock absorbers are coupled to each other.

12. Vehicle roof according to Claim 11, **characterized in that** the shock absorbers (34) each have a piston (38) which is arranged in a chamber (36) and divides the chamber (36) into two pressure chambers (40, 42), and **in that** the pressure chambers (40, 42) of mutually opposite shock absorbers (34) are coupled in such a manner that the pistons (38) of in each case two mutually opposite shock absorbers (34) are simultaneously shifted inwards or outwards with respect to the panel element (14) by pressure fluid being conducted between the pressure chambers (40, 42).

13. Vehicle roof according to one of Claims 1 to 9, **characterized in that** the bearing pin/bearing bushing arrangements (24, 30) on both sides of the panel element (14) are each assigned a tension- and compression-proof driving element (50, 52), said driving elements being coupled to each other in such a manner that the movement of the one driving element causes a corresponding movement of the respective other driving element.

14. Vehicle roof according to Claim 13, **characterized in that** the driving elements (50, 52) are coupled to each other via a gearwheel (48), and **in that** racks (50, 52) or compression-proof driving cables are provided as the driving elements.

15. Vehicle roof according to one of the preceding claims, **characterized in that** the sliding elements (22) are mounted pivotably in the guide rails (16) in order to raise the bearing pin (24) in relation to the guide rail (16).

16. Vehicle roof according to one of the preceding claims, **characterized in that** the bearing pin (24) is mounted pivotably about a pivot axis (54) perpendicular to the panel element (14), in particular by means of its bearing bushing (30) which is mounted pivotably on the panel element (14).

## Revendications

1. Toit de véhicule avec une ouverture de toit (12) prévue dans une surface de toit fixe (10) et un panneau amovible (14) pour fermer et ouvrir au moins partiellement l'ouverture de toit (12), dans lequel des éléments glissants (22) sont articulés sur le panneau amovible (14), qui sont guidés en déplacement dans des rails de guidage (16) disposés latéralement le long de l'ouverture de toit (12), et dans lequel chacun des éléments glissants (22) présente, à son extrémité tournée vers le panneau amovible (14), un tourillon (24) s'étendant essentiellement dans la direction transversale du véhicule, lequel s'engage de façon déplaçable dans un coussinet (30) prévu sur le panneau amovible (14), **caractérisé en ce que** les rails de guidage (16) sont disposés de telle manière que l'écartement nominal mutuel des rails de guidage (16) varie sur la longueur des rails de guidage (16) dans la direction longitudinale du véhicule, et **en ce qu'**il est prévu un dispositif d'amortissement (34), pour empêcher des mouvements transversaux indésirables du panneau amovible (14) par rapport à la surface de toit fixe (10).

2. Toit de véhicule selon la revendication 1, **caractérisé en ce que** les rails de guidage (16) sont disposés avec un certain angle l'un par rapport à l'autre.

3. Toit de véhicule selon la revendication 1, **caractérisé en ce que** les rails de guidage (16) sont courbés parallèlement au plan du toit.

4. Toit de véhicule selon l'une quelconque des revendications précédentes, **caractérisé en ce que** la largeur de la surface de toit fixe (10) varie dans la direction longitudinale du véhicule et les rails de guidage (16) sont disposés parallèlement aux cadres de toit ou aux côtés de toit latéraux (18).

5. Toit de véhicule selon la revendication 4, **caractérisé en ce que** la largeur de l'ouverture de toit (12) varie dans la direction longitudinale du véhicule de manière correspondante à la largeur de la surface de toit fixe (10).

6. Toit de véhicule selon la revendication 5, **caractérisé en ce que** l'ouverture de toit (12) est essentiellement de forme trapézoïdale.

7. Toit de véhicule selon l'une quelconque des revendications précédentes, **caractérisé en ce que** les éléments glissants (22) sont montés de façon pivotante.

8. Toit de véhicule selon l'une quelconque des revendications précédentes, **caractérisé en ce qu'**il est prévu dans le coussinet (30) un élément de ressort (35), qui précontraint le tourillon (24) par rapport au panneau amovible (14).

9. Toit de véhicule selon la revendication 8, **caractérisé en ce que** l'élément de ressort (35) est disposé en prolongement axial du tourillon (24) et est accroché à l'extrémité axiale du tourillon (24).

10. Toit de véhicule selon l'une quelconque des revendications 1 à 9, **caractérisé en ce que** le dispositif d'amortissement comprend au moins un amortisseur (34), qui s'oppose à un déplacement brusque du tourillon (24) par rapport au coussinet (30).

11. Toit de véhicule selon la revendication 10, **caractérisé en ce qu'**un amortisseur (34) est associé chaque fois aux agencements tourillon/coussinet (24, 30) sur les deux côtés du panneau amovible (14) et **en ce que** les amortisseurs situés l'un en face de l'autre sont couplés l'un à l'autre.

12. Toit de véhicule selon la revendication 11, **caractérisé en ce que** les amortisseurs (34) présentent respectivement un piston (38) disposé dans une chambre (36), qui divise la chambre (36) en deux chambres de pression (40, 42), et **en ce que** les chambres de pression (40, 42) sont couplées l'une à l'autre par rapport aux amortisseurs (34), de telle manière que, par le transfert de fluide sous pression entre les chambres de pression (40, 42), les pistons (38) de deux amortisseurs (34) chaque fois situés l'un en face de l'autre soient déplacés simultanément vers l'intérieur ou vers l'extérieur par rapport au panneau amovible (14).

13. Toit de véhicule selon l'une quelconque des revendications 1 à 9, **caractérisé en ce que** des éléments d'entraînement (50, 52) rigides en traction et en compression sont respectivement associés aux agencements tourillon/coussinet (24, 30) sur les deux côtés du panneau amovible (14), éléments qui sont couplés l'un à l'autre de telle manière que le mouvement d'un élément d'entraînement provoque un mouvement correspondant de l'autre élément d'entraînement, respectivement.

14. Toit de véhicule selon la revendication 13, **caractérisé en ce que** les éléments d'entraînement (50, 52) sont couplés l'un à l'autre au moyen d'une roue dentée (48), et **en ce qu'**il est prévu des crémaillères (50, 52) ou des câbles d'entraînement rigides en compression comme éléments d'entraînement.

15. Toit de véhicule selon l'une quelconque des revendications précédentes, **caractérisé en ce que** les éléments glissants (22) sont montés de façon pivotante dans les rails de guidage (16), pour soulever le tourillon (24) par rapport au rail de guidage (16).

16. Toit de véhicule selon l'une quelconque des revendications précédentes, **caractérisé en ce que** le tourillon (24) est monté de façon pivotante autour d'un axe de pivotement (54) perpendiculaire au panneau amovible (14), en particulier au moyen de son coussinet (30) monté de façon pivotante sur le panneau amovible (14).
